# EUROPÄISCHE PATENTSCHRIFT

(11) **EP 2 547 950 B1**
(45) Veröffentlichungstag und Bekanntmachung des Hinweises auf die Patenterteilung: **23.04.2014**
(21) Anmeldenummer: 11708705.6
(22) Anmeldetag: 26.02.2011
(51) Int. Cl.: F17C 13/06, F17C 13/12, F16K 1/30, F16K 17/38

(54) **SICHERHEITSVORRICHTUNG GEGEN ÜBERTEMPERATUR**
SAFETY DEVICE AGAINST EXCESS TEMPERATURE
DISPOSITIF DE SÉCURITÉ CONTRE LA SURTEMPÉRATURE

(30) Priorität: 18.03.2010 DE 102010011879
(43) Veröffentlichungstag der Anmeldung: 23.01.2013
(73) Patentinhaber: Hydac Technology GmbH, 66280 Sulzbach/Saar (DE)
(72) Erfinder: DORR, Walter, 66333 Völklingen (DE)
(74) Vertreter: Bartels, Martin Erich Arthur
(86) Internationale Anmeldenummer: PCT/EP2011/000947
(87) Internationale Veröffentlichungsnummer: WO 2011/113524

(56) Entgegenhaltungen:
- DE-A1- 19 540 692
- DE-T2- 69 607 310
- FR-A1- 2 844 572
- US-A- 2 194 541
- US-B1- 6 592 047

## Beschreibung

Die Erfindung betrifft eine Sicherheitsvorrichtung für durch Gasdruck belastete Behälter, insbesondere zur Absicherung der Arbeitsraum-Gasseite hydropneumatischer Einrichtungen, wie beispielsweise einem Hydrospeicher.

Um Sicherheit im Betrieb von Einrichtungen mit einem Druckgas enthaltenden Behältern, wie Hydrospeichern, sicherzustellen, müssen unter anderem auch alle Gefährdungen, die sich am Aufstellort solcher Einrichtungen ergeben können, berücksichtigt werden, wobei mögliche gefährdende äußere Einflüsse bedeutsam sind, insbesondere die bei einem Brand in der unmittelbaren Umgebung solcher von Gasdruck belasteten Behältern auftretenden Temperaturerhöhungen, die zu einem Versagen des Behälters führen können.

Die DE 32 19 526 A1 offenbart eine Sicherheitsvorrichtung für solche Druckbehälter, insbesondere für Leichtmetall-Druckbehälter für Flüssiggas, wobei diese im wesentlichen durch eine, in einem Flansch des Druckbehälters eingeschraubte Ausschmelzschraube gebildet ist. Die Ausschmelzschraube enthält eine Metallegierung mit niedrigem Schmelzpunkt, wobei die Metallegierung in einem Austrittskanal für unter Druck stehendem Flüssiggas angeordnet ist. Die Ausschmelzlegierung ist durch eine Metallfolie abgedeckt, die die Dichtheit bei Lastwechseln im Betrieb des Druckbehälters gewährleistet.

Im normalen Betrieb befindet sich die Sicherheitsvorrichtung in einem von Flüssigkeit umspülten Bereich, so dass deren Temperatur definiert ist. Im Brandfall ist davon auszugehen, dass das Flüssiggas in die Gasphase übergeht und sich die Ausschmelzlegierung dergestalt erwärmt, wodurch ein Druckausgleich ins Freie ermöglicht ist. Eine Explosion des Druckbehälters ist dadurch vermieden; allerdings kann die Umgebung des Druckbehälters von der rasch austretenden, heißen und flüssigen Ausschmelzlegierung beeinträchtigt oder gefährdet werden.

Die US 6,367,499 B2 offenbart eine Sicherheitsvorrichtung für Druckbehälter, die in einer Abströmöffnung eines Gasdruckbehälters angeordnet ist, wobei ein kolbenartiges, axial in einer Abströmöffnung von dem Gasdruckbehälter nach außen angeordnetes Verschlußelement mit einem Kraftspeicher im Sinne eines Öffnens der Abströmöffnung angeordnet ist. Das Verschlußelement ist gegen einen Anschlag aus schmelzbarem Material gedrückt. Der Anschlag stellt somit eine hitzeempfindliche Entlastungseinrichtung dar. Bei Hitzeeinwirkung kann das geschmolzene Material des Anschlags radial aus der Sicherheitsvorrichtung entweichen, so dass das Verschlußelement die Abströmöffnung freigibt. Ein radiales Entweichen des schmelzbaren Materials stellt dabei einen Sicherheitsgewinn bei der bekannten Sicherheitsvorrichtung dar.

Die US 6 592 047 B1, die FR 2 844 572, die DE 195 40 692 A1 und die US 2 194 541 offenbaren jeweils Sicherheitsvorrichtungen für Druckbehälter mit einer Entlastungseinrichtung, die ein sich verformendes Bauteil auf weist, das nach Auslösen der Sicherheitsvorrichtung in die Umgebung entweichen kann.

Ausgehend von diesem Stand der Technik liegt der Erfindung die Aufgabe zugrunde, eine Sicherheitsvorrichtung für durch Gasdruck belastete Behälter anzugeben, die im Auslösefall keine Gefährdung für die Umgebung darstellt und einfach aufgebaut ist.

Erfindungsgemäß ist dies Aufgabe durch eine Sicherheitsvorrichtung gelöst, die die Merkmale des Patentanspruches 1 in seiner Gesamtheit aufweist.

Eine wesentliche Besonderheit der Erfindung besteht darin, dass die aus einem hitzeempfindlichen Material gebildete Entlastungseinrichtung in einem geschlossenen, keinen von dem Material der Entlastungseinrichtung durchströmbare Öffnung aufweisenden Raum der Sicherheitsvorrichtung angeordnet ist.

Durch diese konstruktive Maßnahme ist eine Gefährdung der Umgebung der Sicherheitsvorrichtung durch geschmolzenes Material der Entlastungseinrichtung verhindert. Zudem ist die Entlastungseinrichtung mit Schub vorzugsweise auf Knicken oder Beulen vorgespannt, so dass es zur Freigabe einer von der Sicherheitsvorrichtung verschlossenen Abströmöffnung grundsätzlich keines Schmelzens der Entlastungseinrichtung bedarf. Es genügt mithin ein Erweichen. Die Dimensionierung des die Entlastungseinrichtung umgebenden Raumes macht erst ein Ausknicken oder Ausbeulen der Entlastungseinrichtung möglich. Die erfindungsgemäße Sicherheitsvorrichtung funktioniert aber auch, wenn die Entlastungseinrichtung unter erhöhter Umgebungstemperatur schmelzen sollte. Im dahingehenden Fall gibt die Entlastungseinrichtung nach wie vor aufgrund der genannten Vorspannung und der damit einhergehenden Schubkräfte die im normalen Betriebszustand des Speichers verschlossene Abströmöffnung frei. Mit einem dahingehenden Wegschmelzen ist insbesondere zu rechnen, wenn die Entlastungseinrichtung aus einem Kunststoffmaterial mit niedrigem Schmelzpunkt besteht. Wird für die Entlastungseinrichtung ein keramischer Werkstoff oder ein Metallwerkstoff, auch in Form eines Bimetalls, eingesetzt, steht eher zu erwarten, dass aufgrund der Vorspannung es zu einem Ausknicken oder Ausbeulen der Entlastungseinrichtung mit anschließender Freigabe der Abströmöffnung kommt.

Die Entlastungseinrichtung wird von einem bevorzugt unmittelbar eine fluidführende Verbindung (Abströmöffnung) verschließenden Bauteil mit Schub im Sinne einer Vorspannung beaufschlagt. Es bedarf keines zusätzlichen, die Entlastungseinrichtung vorspannenden Kraftspeichers, da allein der Gasdruck im Inneren des Behälters die Entlastungseinrichtung beaufschlagt. Das die Abströmöffnung verschließende Bauteil ist mit einer Dichteinrichtung lagefixiert an der Abströmöffnung festgelegt, so dass die Sicherheitsvorrichtung auch im nicht gasdruckbelasteten, unmontierten Zustand ohne Einschränkung handhabbar und insbesondere montierbar ist. Bei Hitzeeinwirkung verformt sich die Entlastungseinrichtung bevorzugt entlang einer Symmetrieachse und das die Ausströmöffnung verschließende Bauteil kann axial innerhalb der Sicherheitsvorrichtung verschoben werden und die Abströmöffnung freigeben. Der ein Mehrfaches des Volumens der Entlastungseinrichtung aufweisende Raum läßt eine solche Umformung der Entlastungseinrichtung im Sinne eines Erweichens oder Schmelzens zu.

Die Entlastungseinrichtung ist bevorzugt aus einem Kunststoffkörper gebildet, der sich unter Hitzeeinwirkung, wie beschrieben, verformen oder wegschmelzen kann. In Abhängigkeit von dem abzusichernden Druck in dem betreffenden Behälter kann es zweckmäßig sein, einen Fluor-Kunststoff zu wählen, insbesondere einen Polyvinyliden-Kunststoff, wie Polyvinylidenfluorid mit einem Dauergebrauchstemperaturbereich von -30°C bis + 140°C oder Polyvinylfluorid mit einem Dauergebrauchstemperaturbereich von - 70°C bis + 110°C.

Die Entlastungseinrichtung kann ein auf Knicken oder Beulen beanspruchtes, stabförmiges Kunststoffteil sein oder ein zylindrisches, im Sinne von einem hohlzylindrisch ausgebildeten Kunststoffteil.

Um ein sicheres Ansprechen der Entlastungseinrichtung auf Hitze zu gewährleisten, ist es zweckmäßig, den Raum um die Entlastungseinrichtung herum etwa 4-fach so groß wie das Volumen, eingenommen durch die Entlastungseinrichtung selbst, zu wählen.

Nachstehend ist die Erfindung anhand von einem in der Zeichnung dargestellten Ausführungsbeispiel näher gezeigt. Es zeigen:
- Fig.1: einen schematisch vereinfacht gezeichneten Längsschnitt eines hydropneumatischen Kolbenspeichers, versehen mit einer Sicherheitsvorrichtung gemäß dem in Fig.2 dargestellten Ausführungsbeispiel;
- Fig.2: einen Längsschnitt durch eine Sicherheitsvorrichtung gemäß der Anwendung nach der Fig.1.

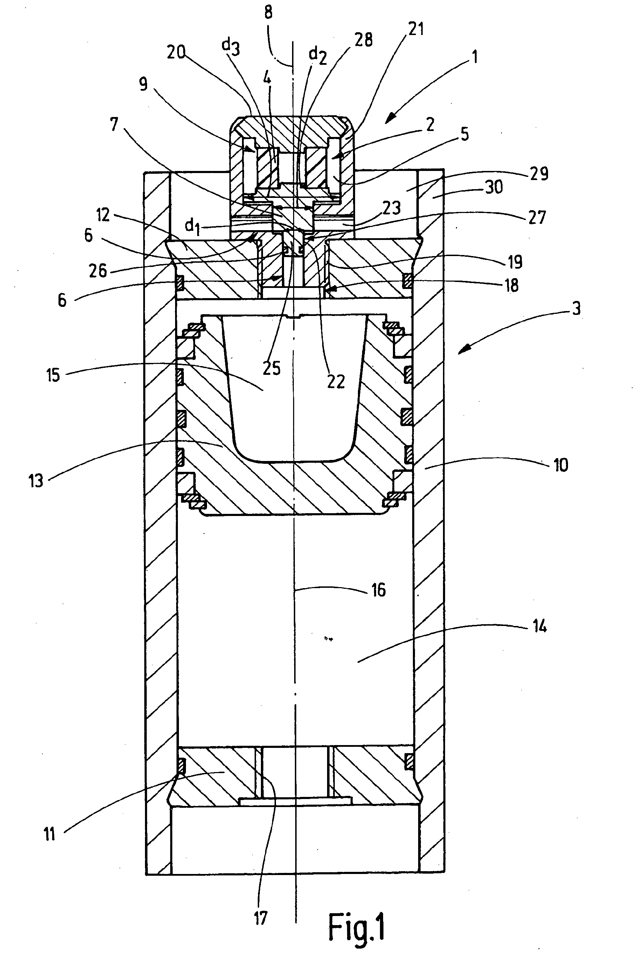

In der Fig.1 ist in einem schematischen, nicht maßstäblichen Längsschnitt ein Behälter 3 gezeigt, der einen Hydrospeicher in Form eines Kolbenspeichers in an sich bekannter Bauweise darstellt. Der Hydrospeicher ist mit einem hohlzylindrischen Speichergehäuse 10 versehen, das endseitig jeweils durch einen Deckel 11 und einen Deckel 12 druckdicht abgeschlossen ist. Ein axial in dem Speichergehäuse 10 verfahrbarer, topfartiger Kolben 13 trennt eine Fluidseite, insbesondere Ölseite 14, von einer Gasseite 15. Die Ölseite 14 ist über einen zur Längsachse 16 des Behälters 3 koaxialen Ölanschluß 17 mit einem nicht dargestellten Hydrauliksystem in üblicher Weise verbindbar. Auf seiner gegenüberliegenden Seite befindet sich in dem Deckel 12 ebenfalls koaxial zur Längsachse 16 gesehen ein Gas-Füllanschluß 18, über den die Gasseite 15 mit einem Arbeitsgas, wie beispielsweise Stickstoff, mit vorbestimmtem Fülldruck in üblicher Weise versehen werden kann.

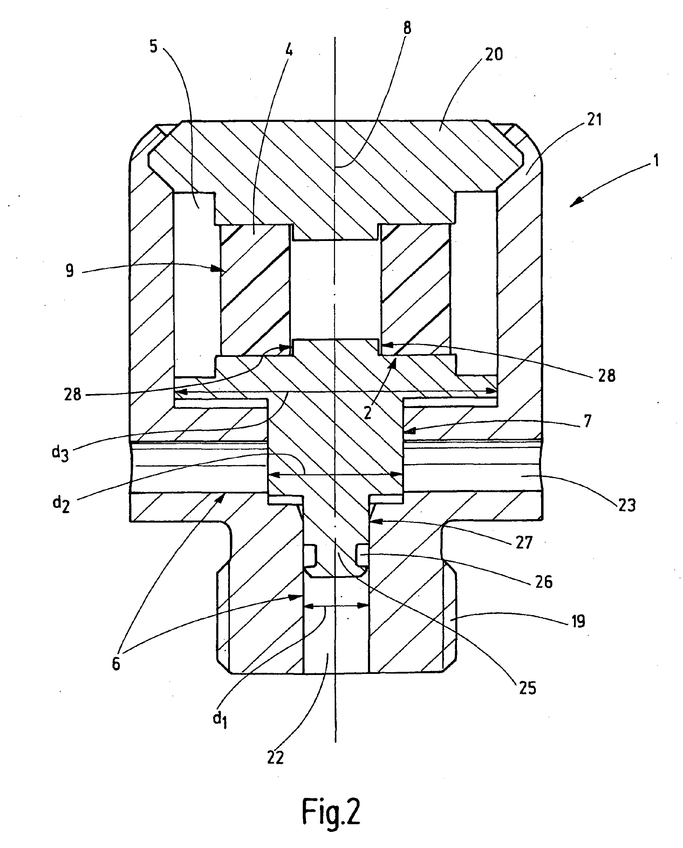

In der Fig.1 ist der Kolbenspeicher mit einem Ausführungsbeispiel der erfindungsgemäßen Sicherheitsvorrichtung gemäß der Darstellung nach der Fig.2 versehen. Die Sicherheitsvorrichtung 1 ist unmittelbar in den Gas-Füllanschluß 18 des Deckels 12 eingeschraubt, so dass die Sicherheitsvorrichtung 1 unmittelbar an die Gasseite 15 des Kolbenspeichers angrenzt.

In der Fig.2 ist in einem schematischen, nicht maßstäblichen Längsschnitt die Sicherheitsvorrichtung 1 für den Behälter 3 gezeigt, die als Ganzes eine Art Einschraubkörper zum Einschrauben in den genannten Gas-Füllanschluß 18 bildet. Zu diesem Zweck weist die Sicherheitsvorrichtung 1 ein Außengewinde 19 auf, das in ein korrespondierendes Innengewinde des Deckels 12 im Bereich des Gas-Füllanschlusses 18 einschraubbar ist. Das Außengewinde 19 ist an einem topfförmigen, in entgegengesetzter Richtung zu dem Außengewinde 19 mit einem eingebördelten Deckel 20 versehenen Gehäuse 21 der Sicherheitsvorrichtung 1 angeordnet. Das Gehäuse 21 kann an seinem Außenumfang einen nicht näher dargestellten Außensechskant aufweisen zum Einschrauben des Gehäuses 21 in den Deckel 12. Auch kann in dem Deckel 20 des Gehäuses 21 ein nicht näher dargestellter Innensechskant vorhanden sein, um das dahingehende Einschrauben veranlassen zu können.

Von dem das Außengewinde 19 tragenden Bereich des Gehäuses 21 bis zu etwa einer axialen Mitte gesehen ist das Gehäuse 21 von einer Durchgangsbohrung 22 durchgriffen, die sich nach oben hin im Durchmesser erweitert und in einen rechtwinklig, das Gehäuse 21 radial durchziehenden Querkanal 23 übergeht.

Sowohl der Querkanal 23 als auch die Durchgangsbohrung 22 werden in dem in der Fig.2 gezeigten Ausgangszustand der Sicherheitsvorrichtung 1 von einem stopfen- oder kolbenartigen Bauteil 7 verschlossen. Das kolbenartige Bauteil 7 liegt mit einem nahezu durchmessergleichen Fortsatz 25 in der Durchgangsbohrung 22 mit einem Dichtelement 26 (nicht eingezeichnet) entlang seines radialen Umfanges 27 an und ist wie der Durchmesser d₁ der Durchgangsbohrung 22 bemessen. Der Fortsatz 25 erweitert sich dann auf etwa den doppelten Durchmesser, mit dem dann das kolbenartige Bauteil 7 den Querkanal 23 im gezeigten Ausgangszustand der Sicherheitsvorrichtung 1 verschließt. Mit diesem Durchmesser d₂ ragt das kolbenartige Bauteil 7 in einen Raum 5 des Gehäuses 21 und erweitert sich dann wiederum tellerförmig auf einen Durchmesser d₃, der geringfügig kleiner ist wie der Innendurchmesser des zylindrisch gebildeten Raumes 5.

In axialer Richtung zu dem Deckel 20 hin gesehen verringert sich das kolbenartige Bauteil 7 wiederum stufenförmig in seinem Durchmesser, so dass sich ein treppenartiger, mit zwei Durchmesserrücksprüngen versehener Querschnittsverlauf für das kolbenartige Bauteil 7 ergibt.

Eine Entlastungseinrichtung 2 in Form eines dickwandigen, zylinderförmigen Bauteils 4, dessen Außendurchmesser größer als seine axiale Länge ist, ist zwischen das kolbenartige Bauteil 7 und den Deckel 20 eingebracht oder eingespannt und durch jeweilige Zentrierflächen 28 an dem Deckel 20 und dem kolbenartigen Bauteil 7 in beide Richtungen nach oben und unten gehalten.

Die Entlastungseinrichtung 2 ist durch Schub aus dem Gasdruck der Gasseite 15 resultierend beaufschlagt. Der Raum 5 hat einen deutlich größeren Innendurchmesser als der Außendurchmesser der Entlastungseinrichtung 2, so dass grundsätzlich bei einer Zunahme des Schubs die Entlastungseinrichtung 2 ausknicken oder ausbauchen kann. Die Entlastungseinrichtung 2 ist bevorzugt als Kunststoffkörper 9 aus einem Polyvinylfluorid-Kunststoff gebildet, der eine Dauergebrauchstemperatur von -40°C bis + 140°C hat, so dass insbesondere bei Überschreiten einer Temperatur von + 140°C durch Hitzeeinwirkung bei einem etwaigen Brand in der Umgebung der Sicherheitsvorrichtung 1 die Entlastungseinrichtung 2 unter dem Schub des Bauteils 7 sich von seiner Symmetrieachse 8 weg verformt und beispielsweise ausbauchend oder ausknickend in den Raum 5 weg verformt wird oder insgesamt ohne weitere Orientierung wegschmilzt. Da die Entlastungseinrichtung 2 hohlzylindrisch ist, ist eine dahingehende Ausbauch- oder Ausknickbewegung auch in das Innere des Hohlzylinders grundsätzlich ermöglicht. Neben dem anfänglichen Ausbauch- oder Ausknickvorgang als Resultat der Materialerweichung bei hoher Temperatur schmilzt dann aber bei entsprechend noch höherer Temperatur die Entlastungseinrichtung 2 und das Kunststoffmaterial wird, wie dargelegt, in den geschlossenen Raum 5 verdrängt. Die dahingehenden Vorgänge spielen sich vergleichbar ab, wenn die Entlastungseinrichtung 2 aus einem metallischen Werkstoff, wie einem Bimetall, besteht.

Im dahingehenden Versagensfall ist es dann dem kolbenartigen Bauteil 7 möglich, das bis dahin die durch die Durchgangsbohrung 22 und den Querkanal 23 gebildete fluidführende Verbindung 6 verschlossen hielt, unter dem sich durch Hitzewirkung auf den Behälter 30 sich ergebenden Überdruck auf der Gasseite in der Durchgangsbohrung 22 derart zu verfahren, dass er sich teilweise in den Raum 5 hineinbewegt, wodurch ein kontrolliertes Abströmen des Gases, wie etwa dem Arbeitsgas Stickstoff, über den Querkanal 23 nach außen hin ermöglicht ist, so dass es nicht ungewollt durch Überdruck zu einer Explosion oder sonstigen Schädigung des Behälters 3 kommen kann. Da der Querkanal 23 kontinuierlich freigegeben wird, kommt es zu einer langsamen und gesteuerten Druckentlastung auf der Gasseite.

Sofern gemäß der Darstellung nach der Fig.1 der Querkanal 23 mit seinen beiden gegenüberliegenden Querkanal-Abschnitten in einen Übergangsraum 29 ausmündet, der randseitig von einem Überstand 30 der Wandung des Speichergehäuses 10 gekammert ist, findet eine Umlenkung des Gasüberdruckstrahles nach oben hin statt, wobei es zu einer weiteren Reduzierung des Überdruckes kommen kann, der im Bereich von 1000 bar und mehr möglicherweise liegt, so dass in der Umgebung des Behälters sich aufhaltende Personen mit Sicherheit nicht gefährdet werden können.

Die in Fig.1 gezeigte Kragenlösung, bei der der Behälter 30 unter Bildung eines Schutzkragens oder Schutzmantels umfaßt ist, kann auch entfallen, ohne dass die Sicherheitsfunktion der Vorrichtung beeinträchtigt wäre.

## Patentansprüche

1. Sicherheitsvorrichtung für durch Gasdruck beaufschlagte Behälter, insbesondere zur Absicherung der Arbeitsraum-Gasseite hydropneumatischer Einrichtungen, wie Hydrospeicher, mit einer Entlastungseinrichtung (2) zum Abbau eines erhöhten Gasdruckes in dem jeweiligen Behälter (3), hervorgerufen durch Hitzeeinwirkung, **dadurch gekennzeichnet, dass** die Entlastungseinrichtung (2) ein unter Einwirkung einer Schub- oder Druckkraft auf Knicken oder Beulen belastetes Bauteil (4) ist, dessen Gestaltsveränderung bei Hitzeeinwirkung auf die Sicherheitsvorrichtung (1) in einen nach außen geschlossenen Raum (5) derart erfolgt, dass eine fluidführende Verbindung (6) vom Inneren des Behälters (3) nach außen in Richtung der Umgebung ermöglicht ist.

2. Sicherheitsvorrichtung nach Anspruch 1, **dadurch gekennzeichnet, dass** die Entlastungseinrichtung (2) bei Hitzeeinwirkung durch Einwirkung der Schub- oder Druckkraft von einem die fluidführende Verbindung (6) mittelbar oder unmittelbar verschließenden Bauteil (7) aus einer Symmetrieachse (8) der Sicherheitsvorrichtung (1) wegverformt ist.

3. Sicherheitsvorrichtung nach Anspruch 1 oder 2, **dadurch gekennzeichnet, dass** die Entlastungseinrichtung (2) in einem ein Mehrfaches des Volumens der Entlastungseinrichtung (2) aufnehmenden Raum (5) der Sicherheitsvorrichtung (1) angeordnet ist.

4. Sicherheitsvorrichtung nach einem der Ansprüche 1 bis 3, **dadurch gekennzeichnet, dass** die Entlastungseinrichtung (2) aus einem sich unter Hitzeeinwirkung verformenden Kunststoff-Körper (9) gebildet ist.

5. Sicherheitsvorrichtung nach Anspruch 4, **dadurch gekennzeichnet, dass** der Kunststoff-Körper (9) aus einem Fluor-Kunststoffmaterial gebildet ist.

6. Sicherheitsvorrichtung nach Anspruch 5, **dadurch gekennzeichnet, dass** das Fluor-Kunststoffmaterial ein Polyvinylden-Kunststoff ist.

7. Sicherheitsvorrichtung nach einem der Ansprüche 1 bis 6, **dadurch gekennzeichnet, dass** die Entlastungseinrichtung (2) ein stabförmiger Hohlkörper ist.

8. Sicherheitsvorrichtung nach einem der Ansprüche 2 bis 7, **dadurch gekennzeichnet, dass** die Entlastungseinrichtung (2) zwischen einem Deckel (20) ihres Gehäuses (21) und dem die fluidführende Verbindung (6) sperrenden Bauteil (7) angeordnet ist, das (7) über eine Durchgangsbohrung (22) von der Gasseite des Behälters (3) aus mit Druck beaufschlagbar ist.

9. Sicherheitsvorrichtung nach Anspruch 8, **dadurch gekennzeichnet, dass** bei Freigabe der fluidführenden Verbindung (6) durch das stopfen- oder kolbenartige Bauteil (7) die Durchgangsbohrung (22) in einen Querkanal (23) ausmündet, der nach außen hin von einem Überstand (30) der Wandung des Speichergehäuses (10) des Behälters (3) umfaßt ist.

## Claims

1. A safety device for gas-pressurised containers, in particular for safeguarding the gas side of the working space of hydropneumatic devices, such as for example a hydraulic accumulator, comprising a relief device (2) for reducing an increased gas pressure in the respective container (3) caused by the action of heat, **characterised in that** the relief device (2) is a component (4) which is loaded to buckle or bulge under the action of a shear force or compressive force, the change of shape of which under the action of heat on the safety device (1) into a space (5) closed to the outside takes place such that a fluid-conveying connection (6) from the interior of the container (3) to the outside is made possible in the direction of the surroundings.

2. The safety device according to Claim 1, **characterised in that** the relief device (2) under the action of heat is deformed away from an axis of symmetry (8) of the safety device (1) by the action of the shear force or compressive force by a component (7) which directly or indirectly closes the fluid-conveying connection (6).

3. The safety device according to Claim 1 or 2, **characterised in that** the relief device (2) is disposed in a space (5) of the safety device (1), which space accommodates several times the volume of the relief device (2).

4. The safety device according to any of Claims 1 to 3, **characterised in that** the relief device (2) is formed from a plastic body (9) which deforms under the action of heat.

5. The safety device according to Claim 4, **characterised in that** the plastic body (9) is formed from a fluoroplastic material.

6. The safety device according to Claim 5, **characterised in that** the fluoroplastic material is a polyvinylidene plastic.

7. The safety device according to any of Claims 1 to 6, **characterised in that** the relief device (2) is a rod-shaped hollow body.

8. The safety device according to any of Claims 2 to 7, **characterised in that** the relief device (2) is disposed between a cover (20) of its housing (21) and the component (7) which blocks the fluid-conveying connection (6) and which component (7) is pressurised via a through bore (22) from the gas side of the container (3).

9. The safety device according to Claim 8, **characterised in that** when the fluid-conveying connection (6) is cleared by the plug-like or piston-like component (7), the through bore (22) discharges into a cross channel (23) which is encompassed to the outside by a projection (30) of the wall of the accumulator housing (10) of the container (3).

## Revendications

1. Dispositif de sécurité pour des récipients alimentaires soumis à une pression de gaz, notamment, pour la sécurisation des côtés gaz d'espace de travail de dispositifs hydropneumatiques, comme des accumulateurs hydrauliques, comprenant un dispositif (2) de décharge pour faire diminuer une pression de gaz élevée dans le réservoir (3) respectif, provoquée par l'action de la chaleur, **caractérisé en ce que** le dispositif (2) de décharge est un élément (4) qui subit des flambages ou un bosselage sous l'effet d'une force de cisaillement ou de pression et dont la modification de forme par l'action de la chaleur sur le dispositif (1) de sécurité s'effectue dans un espace (5) fermé vers l'extérieur, de manière à ce qu'une liaison (6) fluidique soit rendue possible de l'intérieur du récipient (3) vers l'extérieur en direction de l'atmosphère ambiante.

2. Dispositif de sécurité suivant la revendication 1, **caractérisé en ce que** le dispositif (2) de décharge se déforme en s'écartant de l'axe (8) de symétrie du dispositif (1) de sécurité sous l'action de la chaleur par l'effet de la force de cisaillement ou de pression d'un élément (7) fermant directement ou indirectement la liaison (6) fluidique.

3. Dispositif de sécurité suivant la revendication 1 ou 2, **caractérisé en ce que** le dispositif (2) de décharge est disposé dans un espace (5) du dispositif (1) de sécurité ayant plusieurs fois le volume du dispositif (2) de décharge.

4. Dispositif de sécurité suivant l'une des revendications 1 à 3, **caractérisé en ce que** le dispositif (2) de décharge est formé d'un corps (9) en matière plastique se déformant sous l'effet de la chaleur.

5. Dispositif de sécurité suivant la revendication 4, **caractérisé en ce que** le corps (9) en matière plastique est en une matière plastique fluorée.

6. Dispositif de sécurité suivant la revendication 5, **caractérisé en ce que** la matière plastique fluorée est une matière plastique en polyvinylidène.

7. Dispositif de sécurité suivant l'une des revendications 1 à 6, **caractérisé en ce que** le dispositif (2) de décharge est un corps creux en forme de barre.

8. Dispositif de sécurité suivant l'une des revendications 2 à 7, **caractérisé en ce que**, le dispositif (2) de décharge est disposé entre un couvercle (20) de son corps (21) et l'élément (7) fermant la liaison (6) fluidique et pouvant être alimenté en pression par un trou (22) de passage à partir du côté gaz du récipient (3).

9. Dispositif de sécurité suivant la revendication 8, **caractérisé en ce que** lorsque la liaison (6) fluidique est dégagée par l'élément (7) de type en bouchon ou en piston, le trou (22) de passage débouche dans un canal (23) transversal qui est entouré vers l'extérieur d'un dépassement (30) de la paroi de l'enveloppe (10) du récipient (3).
